# EUROPÄISCHE PATENTSCHRIFT

(11) **EP 2 243 134 B1**
(45) Veröffentlichungstag und Bekanntmachung des Hinweises auf die Patenterteilung: **11.09.2013**
(21) Anmeldenummer: 09710572.0
(22) Anmeldetag: 21.01.2009
(51) Int. Cl.: G10K 15/02

(54) **VERFAHREN ZUR SITUATIVEN BERECHNUNG DES AKUSTIKVERHALTENS EINES FAHRZEUGINNENRAUMS**
METHOD FOR THE SITUATIVE CALCULATION OF THE ACOUSTIC BEHAVIOUR OF A VEHICLE INTERIOR
PROCÉDÉ DE CALCUL DE SITUATION POUR LE COMPORTEMENT ACOUSTIQUE D'UN HABITACLE DE VÉHICULE

(30) Priorität: 11.02.2008 DE 102008008501
(43) Veröffentlichungstag der Anmeldung: 27.10.2010
(73) Patentinhaber: Svox AG, 8048 Zürich (CH)
(72) Erfinder: LUKAS, Klaus, 81739 München (DE)
(74) Vertreter: PATWIL AG
(86) Internationale Anmeldenummer: PCT/EP2009/050620
(87) Internationale Veröffentlichungsnummer: WO 2009/100968

(56) Entgegenhaltungen:
- DE-A1- 10 246 048
- DE-A1- 10 308 414
- DE-A1-102004 022 379
- DE-C2- 4 308 398
- DE-U1- 29 723 502
- JP-A- 4 336 800
- US-A- 5 170 433

## Beschreibung

Die Erfindung betrifft ein Verfahren zur situativen Berechnung des Akustikverhaltens eines Fahrzeuginnenraums gemäß dem Oberbegriff des Anspruchs 1.

Sprachtechnologien finden zunehmend Einsatz in Fahrzeugumgebungen. Vor allem für zukünftige Verfahren zur aktiven akustischen Innenraum-Geräuschdämpfung in Fahrzeugen, sowie auch für situative Adaptionsalgorithmen der Spracherkennung ist ein genaues Modell des Fahrzeuginnenraums unerlässlich.

Hierbei spielt z.B. die geometrische Belegung des Fahrzeugs durch Personen eine wichtige Rolle, da neben der statischen Innenraum-Geometrie damit ein großer Teil des durch mitfahrende Personen dynamisch veränderten Innenraums beeinflusst wird.

Derzeit basieren die zugrundeliegenden Modelle für die Raumakustik in der Regel auf einem statischen geometrischen Innenraum, gegebenenfalls ergänzt mit einem simulierten Fahrermodell. Die verbleibenden Sitze bzw. deren Belegung werden nicht weiter behandelt, oder höchstenfalls mit einem durchschnittlichen Beifahrermodell belegt, unabhängig von der realen Besetzung.

Auf der anderen Seite werden in zunehmendem Maße Sitzbelegungssensoren auch auf den Beifahrersitzen und in den hinteren Reihen von Fahrzeugen verbaut, um Sicherheitswarnleuchten bei nichtangeschnallten Beifahrern erleuchten lassen zu können. Diese Sensoren sind in der Regel gewichtsabhängig, so dass aus dem Gewicht auf eine real vorhandene Person geschlossen werden kann.

DE 43 08 398 C2 ist ein Verfahren zur situativen Berechnung des Akustikverhaltens eines Fahrzeuginnenraums mittels eines akustischen Algorithmus entnehmbar, in welchen Algorithmus situative Akustikparameter einfließen, welche anhand einer tatsächlichen Sitzbelegung in dem Fahrzeuginnenraum ausgewählt werden, wobei vor einer Durchführung des akustischen Algorithmus die Belegung von Sitzplätzen in dem Fahrzeuginnenraum ermittelt wird und anhand der ermittelten Sitzbelegung in einer Akustikparameterdatenbank vorab festgelegte Akustikparameter ermittelt werden, welche dann dem akustischen Algorithmus zugeführt werden.

Durch die DE 103 08 414 B4 ist ein Verfahren zur Steuerung eines Akustiksystems in einem Fahrzeug bekannt, bei dem mittels eines Innenraum-Sensierungssystems der Fahrzeuginnenraum erfasst wird und mittels eines Objekterkennungssystems aus den Daten eines Innenraum-Sensierungssystems zumindest die Lage des Kopfes eines Fahrzeuginsassens im Fahrzeuginnenraum erkannt wird, um abhängig von der Sitzbelegung und abhängig von der Lage des Kopfes automatisch eine optimale Einstellung des Akustiksystems vorzunehmen.

Durch die DE 10 2004 022 379 A1 ist bekannt, die Klangkulisse einer Audioanlage an eine tatsächliche Belegung von Sitzplätzen in einem Fahrzeuginnenraum anzupassen. Um eine höhere Erkennungssicherheit zu gewährleisten, werden zur Ermittlung der Belegung von Sitzplätzen Druck- und Temperatursensoren kombiniert.

Durch die DE 102 46 048 A1 ist ein Verfahren zur Ermittlung einer Belegung von Sitzplätzen in einem Fahrzeuginnenraum anhand wenigstens einer akustischen Übertragungsfunktion bekannt. Dabei kann zusätzlich vorgesehen sein, anhand der akustischen Übertragungsfunktion Größe und Ausdehnung einzelner Elemente in dem Fahrzeuginnenraum zu bestimmen.

Als eine Aufgabe der Erfindung kann es angesehen werden, ein Verfahren zu entwickeln, welches eine situationsangepasste bzw. situative Berechnung des Akustikverhaltens eines Fahrzeuginnenraums ermöglicht.

Offenbarung der Erfindung und deren Vorteile: Erfindungsgemäß werden die Nachteile des Standes der Technik vermieden und weitere, darüber hinausgehende Vorteile erreicht durch ein Verfahren mit den Merkmalen des Anspruchs 1.

Ein erfindungsgemäßes Verfahren zur situationsangepassten bzw. situativen Berechnung des Akustikverhaltens eines Fahrzeuginnenraums sieht demnach vor, dass das Akustikverhalten durch einen akustischen Algorithmus berechnet wird, in den situative Akustikparameter einfließen, welche anhand einer tatsächlichen Sitzbelegung in einem Fahrzeuginnenraum ausgewählt werden.

Dies erlaubt eine gegenüber dem Stand der Technik genauere Berechnungen des Akustikverhaltens eines Fahrzeuginnenraums durch Berücksichtigung einer Sitzplatzbelegung bei der Ermittlung von Ergebnis der Berechnung des Akustikverhaltens beeinflussenden situativen Akustikparametern.

Vor einer Durchführung eines akustischen Algorithmus, wie z.B. einer akustischen Innenraum-Geräuschdämpfung oder eines Adaptionsalgorithmus zur Spracherkennung, wird die Belegung von Sitzplätzen in dem Fahrzeuginnenraum, beispielsweise durch Abfragen der Sitzbelegungssensoren, ermittelt und es werden anhand der ermittelten Sitzbelegung in einer Akustikparameterdatenbank vorab beispielsweise durch Tests mit realen Personen festgelegte Akustikparameter ermittelt, welche dann dem akustischen Algorithmus zugeführt werden.

Der akustische Algorithmus A kann dann mit situationsspezifischen Akustikparametern durchgeführt werden und erzielt somit eine höher Realitätsbezogenheit als ein statisches Verfahren ohne Berücksichtigung der echten Fahrzeugbelegung. Erfindungsgemäß wird außerdem anhand von zumindest die ermittelte Belegung von Sitzplätzen in dem Fahrzeuginnenraum umfassender Belegungsdaten ein spezifisches Volumenmodell der in dem Fahrzeuginnenraum sitzenden Personen erstellt, welches in den akustischen Algorithmus einfließt.

Eine andere vorteilhafte Ausgestaltung der Erfindung sieht vor, dass die Belegungsdaten zusätzliche Details, wie beispielsweise Gewicht oder Sitzdruckverteilung, enthalten, welche bei der Auswahl der Akustikparameter berücksichtigt werden.

Vorzugsweise werden bei der Auswahl der Akustikparameter Fahrzustände, wie beispielsweise die Geschwindigkeit, mit der sich ein Fahrzeug aktuell fortbewegt, berücksichtigt.

Eine zusätzliche vorteilhafte Ausgestaltung der Erfindung sieht vor, dass bei der Auswahl der Akustikparameter geometrische Einflussfaktoren, wie z.B. Öffnung von Fenstern oder Schiebedächern, berücksichtigt werden.

Gemäß einer vorteilhaften Ausgestaltung der Erfindung wird in Abhängigkeit von den in den akustischen Algorithmus einfließenden ausgewählten bzw. ermittelten Akustikparametern eine entsprechende Auswahl und Festlegung von akustischen Sprachparametern bei einer Spracherkennung durchgeführt.

Eine vorteilhafte Ausgestaltung der Erfindung sieht eine Verwendung für Audiosysteme in Fahrzeug- und Transportsystemen vor, um eine Audioausgabe im Hinblick auf die durch die Sitzplatzbelegung beeinflusste tatsächliche Fahrzeugakustik zu optimieren.

Vorzugsweise wird dabei die Audioausgabe auf die in dem Fahrzeuginnenraum sitzenden Personen bzw. auf die tatsachlichen Mitfahrer optimiert.

Zudem können unbelegte Sitze unbeschallt und/oder unberücksichtigt bleiben.

Vorteile der Erfindung gegenüber dem Stand der Technik ergeben sich insbesondere dadurch, dass es mit dem vorgeschlagenen Verfahren möglich ist, durch ein genaueres bzw. einer realen Sitzbelegung in einem Fahrzeuginnenraum entsprechendes Modell der aktuellen Innenraumgeometrie deutlich bessere A-kustikpararneter z.B. für ein aktive akustischen Innenraum-Geräuschdämpfung oder einen Adaptionsalgorithmus zur Spracherkennung zu bestimmen. Weitere Vorteile ergeben sich durch eine bessere akustische Verarbeitung, welche sich in einem höherwertigen Qualitätseindruck für einen Benutzer und in einer höheren Akzeptanz durch den Benutzer niederschlägt.

Ein Ausführungsbeispiel der Erfindung ist in der Zeichnung näher dargestellt und wird im Folgenden näher beschrieben. Es zeigt:

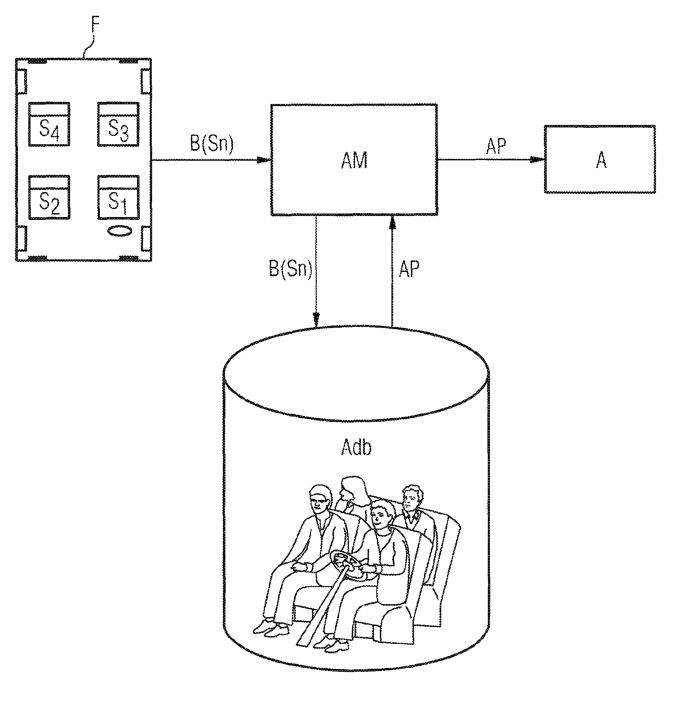

- Fig. 1: eine schematische Darstellung eines Verfahrens zur situationsangepassten bzw. situativen Berechnung des Akustikverhaltens eines Fahrzeuginnenraums.

Ein in Fig. 1 in seinem Ablauf schematisch dargestelltes erfindungsgemäßes Verfahren zur situationsangepassten bzw. situativen Berechnung des Akustikverhaltens eines Fahrzeuginnenraums F erstellt anhand von Sitzbelegungssensoren S1, S2, S3, S4 ein spezifisches Volumenmodell der in dem Fahrzeuginnenraum F sitzenden Personen und führt eine entsprechende Auswahl von Akustikparametern AP durch, anhand denen beispielsweise akustische Sprachparameter festgelegt werden.

Hierzu werden zunächst vor einer Durchführung eines akustischen Algorithmus A, wie z.B. einer akustischen Innenraum-Geräuschdämpfung oder eines Adaptionsalgorithmus zur Spracherkennung, die Sitzbelegungssensoren S1, S2, S3, S4, allgemein durch Sn zusammengefasst, durch einen Auswahlmechanismus AM zur Ermittlung der situativen Akustikparameter AP abgefragt. Durch die Abfrage werden Belegungsdaten B(Sn) erhalten, welche der Auswahlmechanismus AM zur Bestimmung der Akustikparameter AP verwendet. Mit den Belegungsdaten B(Sn) für die Sitzpositionen S1, S2, S3, S4 werden von dem Auswahlmechanismus AM in einer Akustikparameterdatenbank Adb vorab festgelegte Akustikparameter AP ermittelt. Diese Akustikparameter AP können bei einem Fahrzeughersteller durch Tests mit realen Personen bestimmt und festgelegt werden. Die Belegungsdaten B(Sn) können dabei genauere Details wie Gewicht oder Sitzdruckverteilung enthalten. Ferner können bei der Auswahl der Akustikparameter AP weitere Fahrzustände und geometrische Einflussfaktoren wie z.B. Geschwindigkeit, Öffnung von Fenstern oder Schiebedächern berücksichtigt werden.

Die ermittelten Akustikparameter AP werden nach der Ermittlung in der Datenbank Adb dann von dem Auswahlmechanismus AM dem akustischen Algorithmus A zugeführt. Der akustische Algorithmus A kann dann mit situationsspezifischen Akustikparametern AP durchgeführt werden und erzielt somit eine höher Realitätsbezogenheit als ein statisches Verfahren ohne Berücksichtigung der echten Fahrzeuginnenraumbelegung.

Wichtig ist hervorzuheben, dass das erfindungsgemäße Verfahren auch für zukünftige Audiosysteme in Fahrzeug- und Transportsystemen verwendet werden kann, um die Audio-Ausgabe im Hinblick auf die Fahrzeugakustik zu optimieren. Hierbei kann dann z.B. die Ausgabe auf die tatsachlichen Mitfahrer optimiert werden und die leeren Sitze können unbeschallt und/oder unberücksichtigt bleiben.

## Patentansprüche

1. Verfahren zur situativen Berechnung des Akustikverhaltens eines Fahrzeuginnenraums (F) mittels eines akustischen Algorithmus (A), in den situative Akustikparameter (AP) einfließen, welche anhand einer tatsächlichen Sitzbelegung (B(Sn)) in dem Fahrzeuginnenraum (F) ausgewählt werden, wobei vor einer Durchführung eines akustischen Algorithmus (A) die Belegung (B(Sn) von Sitzplätzen (S1, S2, S3, S4, Sn) in dem Fahrzeuginnenraum (F) ermittelt wird und anhand der ermittelten Sitzbelegung (B(Sn)) in einer Akustikparameterdatenbank (Adb) vorab festgelegte Akustikparameter (AP) ermittelt werden, welche dann dem akustischen Algorithmus (A) zugeführt werden, **dadurch gekennzeichnet,**
**dass** anhand von zumindest die ermittelte Belegung (B(Sn)) von Sitzplätzen (S1, S2, S3, S4, Sn) in dem Fahrzeuginnenraum (F) umfassender Belegungsdaten ein spezifisches Volumenmodell der in dem Fahrzeuginnenraum (F) sitzenden Personen erstellt wird, welches in den akustischen Algorithmus (A) einfließt.

2. Verfahren nach Anspruch 1,
**dadurch gekennzeichnet,**
**dass** die Belegungsdaten (B(Sn)) zusätzliche Details enthalten, welche bei der Auswahl der Akustikparameter (AP) berücksichtigt werden.

3. Verfahren nach Anspruch 2,
**dadurch gekennzeichnet,**
**dass** die in den Belegungsdaten enthaltenen zusätzlichen Details Gewicht und/oder Sitzdruckverteilung umfassen.

4. Verfahren nach einem der vorhergehenden Ansprüche,
**dadurch gekennzeichnet,**
**dass** bei der Auswahl der Akustikparameter (AP) Fahrzustände berücksichtigt werden.

5. Verfahren nach einem der vorhergehenden Ansprüche,
**dadurch gekennzeichnet,**
**dass** bei der Auswahl der Akustikparameter (AP) geometrische Einflussfaktoren berücksichtigt werden.

6. Verfahren nach Anspruch 5,
**dadurch gekennzeichnet,**
**dass** die bei der Auswahl der Akustikparameter (AP) berücksichtigten geometrischen Einflussfaktoren eine Öffnung von Fenstern und/oder Schiebedächern umfassen.

7. Verfahren nach einem der vorhergehenden Ansprüche,
**dadurch gekennzeichnet,**
**dass** in Abhängigkeit von den ausgewählten bzw. ermittelten Akustikparametern (AP) eine entsprechende Auswahl und Festlegung von akustischen Sprachparametern bei einer Spracherkennung durchgeführt wird.

8. Verfahren nach einem der vorhergehenden Ansprüche,
**dadurch gekennzeichnet,**
**dass** das erfindungsgemäße Verfahren für Audiosysteme in Fahrzeug- und Transportsystemen verwendet wird, um eine Audioausgabe im Hinblick auf die durch die Sitzplatzbelegung (B(Sn) beeinflusste tatsächliche Fahrzeugakustik zu optimieren.

9. Verfahren nach Anspruch 8,
**dadurch gekennzeichnet,**
**dass** die Audioausgabe auf die in dem Fahrzeuginnenraum (F) sitzenden Personen optimiert wird.

10. Verfahren nach Anspruch 9,
**dadurch gekennzeichnet,**
**dass** unbelegte Sitze unbeschallt und/oder unberücksichtigt bleiben.

## Claims

1. A method for the situative calculation of the acoustic behaviour of a vehicle interior (F) by means of an acoustic algorithm (A), into which acoustic parameters (AP) are entered and are selected with the help of an actual seat occupancy (B(Sn)) in the vehicle interior (F), wherein the occupancy (B(Sn) of seats (S1, S2, S3, S4, Sn) in the vehicle interior (F) is determined prior to the execution of an acoustic algorithm (A) and the acoustic parameters (AP) are selected from a previously defined data base of acoustic parameters (Adb) on the basis of the determined seat occupancy (B(Sn)), which acoustic parameters (AP) are then supplied to the acoustic algorithm
**characterised in**
**that** a specific volume model of the persons sitting in the vehicle interior (F) is established by means of occupancy data, which comprise at least the occupancy (B(Sn)) of seats (S1, S2, S3, S4, Sn) in the vehicle interior (F), and which specific volume model is introduced into the acoustic algorithm (A).

2. Method according to claim 1,
**characterised in**
**that** the data of occupancy (B (Sn)) contain additional details, which are considered when selecting the acoustic parameters (AP).

3. Method according to claim 2,
**characterised in**
**that** the additional details contained in the data of occupancy comprise weight or/and distribution of seat pressure.

4. Method according to any of the preceding claims,
**characterised in**
**that** driving conditions are considered when selecting the acoustic parameters (AP).

5. Method according to any of the preceding claims,
**characterised in**
**that** geometrical factors of influence are considered when selecting the acoustic parameters (AP).

6. Method according to claim 5,
**characterised in**
**that** the factors of influence considered when selecting the acoustic parameters (AP) comprise opening of windows and/or of sliding roof.

7. Method according to any of the preceding claims,
**characterised in**
**that** in dependence upon the selected or determined acoustic parameters (AP), a corresponding selection and determination of acoustic speech parameters is effected when recognising speech.

8. Method according to any of the preceding claims,
**characterised in**
**that** the method according to the invention is used for audio systems in vehicle and transport systems to optimise an audio output with respect to the actual vehicle acoustics influenced by the seat occupancy (B (Sn).

9. Method according to claim 8,
**characterised in**
**that** the audio output is optimised with respect to the persons seating within the vehicle interior (F).

10. Method according to claim 9,
**characterised in**
**that** not occupied seats remain without acoustic irradiation and/or disregarded.

## Revendications

1. Procédé de calcul de situation pour le comportement acoustique d'un habitacle de véhicule (F) à l'aide d'un algorithme acoustique (A), dans lequel des paramètres acoustiques (AP) glissent, qui sont choisis à l'aide de l'occupation des places actuelle (B (Sn)) dans l'habitacle de véhicule (F), dans lequel l'occupation (B (Sn) de sièges (S1, S2, S3, S4, Sn) dans habitacle de véhicule (F) est déterminée avant de l'exécution d'un algorithme acoustique (A), et à l'aide de l'occupation déterminée de sièges (B (Sn)) des paramètres acoustiques (AP) préalablement définis dans une banque de données de paramètres acoustiques (Adb) sont déterminés, qui sont après fournis à l'algorithme acoustique (A),
**caractérisé en ce,**
**qu'**un modèle spécifique de volume des personnes assises dans habitacle de véhicule (F) est établis à l'aide de données d'occupation, qui comprend au moins l'occupation déterminée (B (Sn)) de sièges (S1, S2, S3, S4, Sn) dans l'habitacle de véhicule (F), et que ce modèle spécifique glissent dans l'algorithme acoustique (A).

2. Procédé selon la revendication 1,
**caractérisé en ce,**
**que** les données d'occupation (B (Sn)) contiennent des détails additionnels, qui sont considérés lors de la sélection des paramètres acoustiques (AP).

3. Procédé selon la revendication 2,
**caractérisé en ce,**
**que** les détails additionnels contenus dans les données d'occupation comprennent le poids et/ou la distribution de pression de sièges.

4. Procédé selon une quelconque des revendications précédentes,
**caractérisé en ce,**
**que** l'on considère des états de marche lors de la sélection des paramètres acoustiques (AP).

5. Procédé selon une quelconque des revendications précédentes,
**caractérisé en ce,**
**que** des facteurs d'influence géométriques sont considérés lors de la sélection des paramètres acoustiques (AP).

6. Procédé selon la revendication 5,
**caractérisé en ce,**
**que** les facteurs géométriques d'influence considérés lors de la sélection des paramètres acoustiques (AP) comprennent l'ouverture des fenêtres et/ou des toits ouvrants.

7. Procédé selon une quelconque des revendications précédentes,
**caractérisé en ce,**
**que** en dépendance des paramètres acoustiques (AP) sélectionnés ou déterminés, une sélection et détermination correspondante des paramètres de parole acoustiques est effectuée lors d'une reconnaissance automatique de la parole.

8. Procédé selon une quelconque des revendications précédentes,
**caractérisé en ce,**
**que** le procédé selon l'invention est utilisé pour des systèmes audio dans des systèmes de véhicule et de transport, pour optimaliser une émission audio au regard de l'acoustique actuelle de véhicule influencée par l'occupation des places (B (Sn).

9. Procédé selon la revendication 8,
**caractérisé en ce,**
**que** l'émission audio est optimalisée au regard des personnes étant assis dans l'habitacle de véhicule (F).

10. Procédé selon la revendication 9,
**caractérisé en ce,**
**que** les sièges inoccupés restent insonorisés et/ou inconsidérés.
